# EUROPEAN PATENT APPLICATION

(11) **EP 3 376 820 A1**
(43) Date of publication of application: **19.09.2018**
(21) Application number: 16862123.3
(22) Date of filing: 02.11.2016
(51) Int. Cl.: H04W 88/04, H04W 72/04, H04W 92/10

(54) **USER EQUIPMENT, PROCESSOR AND NETWORK DEVICE**

(30) Priority: 06.11.2015 JP 2015218939
(71) Applicant: Kyocera Corporation, Kyoto-shi, Kyoto 612-8501 (JP)
(72) Inventor: ADACHI, Hiroyuki, Kyoto-shi Kyoto 612-8501 (JP); FUJISHIRO, Masato, Kyoto-shi Kyoto 612-8501 (JP)
(74) Representative: Viering, Jentschura & Partner mbB Patent- und Rechtsanwälte
(86) International application number: PCT/JP2016/082582
(87) International publication number: WO 2017/078063

(57) **Abstract**

A radio terminal according to one embodiment comprises a processor. The processor is configured to relay, through a proximity service, traffic of a remote terminal configured to perform communication with a network through a relay terminal between the remote terminal and the network. The processor is configured to notify the network of information on the number of remote terminals in which the traffic is relayed by the radio terminal.

## Description

### TECHNICAL FIELD

The present application relates to a radio terminal, a processor, and a network device used in a communication system.

### BACKGROUND ART

In 3GPP (3rd Generation Partnership Project), which is a project aiming to standardize a mobile communication system, the specifications of proximity service (ProSe) have been designed.

The ProSe includes a UE-to-Network relay in which a first radio terminal (ProSe UE-to-Network Relay) relays, between a second radio terminal (Remote UE) which is outside a network and the network, data (traffic) of the second radio terminal. In the UE-to-Network relay, it is assumed that a PDN connection (hereinafter, called "relay PDN connection") for relaying data of the second radio terminal is established.

### PRIOR ART DOCUMENT

### NON-PATENT DOCUMENT

Non Patent Document 1: 3GPP Technical Report "TS 23.303 V13.1.1" September 30, 2015

### SUMMARY

A radio terminal according to one embodiment comprises a processor. The processor is configured to relay, through a proximity service, traffic of a remote terminal configured to perform communication with a network through a relay terminal between the remote terminal and the network. The processor is configured to notify the network of information on the number of remote terminals in which the traffic is relayed by the radio terminal.

A processor according to one embodiment is a processor for controlling a radio terminal. The processor is configured to relay, through a proximity service, traffic of a remote terminal configured to perform communication with a network through a relay terminal between the remote terminal and the network. The processor is configured to notify the network of the number of remote terminals in which the traffic is relayed by the radio terminal.

A network device according to one embodiment is configured to communicate with a radio terminal configured to relay, through a proximity service, traffic of a remote terminal configured to perform communication with a network through a relay terminal between the remote terminal and the network. The network device is configured to receive, from the radio terminal, information on the number of remote terminals in which the traffic is relayed by the radio terminal.

A processor according to one embodiment is a processor for controlling a network device configured to communicate with a radio terminal configured to relay, through a proximity service, traffic of a remote terminal configured to perform communication with a network through a relay terminal between the remote terminal and the network. The processor is configured to receive, from the radio terminal, information on the number of remote terminals in which the traffic is relayed by the radio terminal.

### BRIEF DESCRIPTION OF THE DRAWINGS

Fig. 1 is a diagram illustrating a configuration of an LTE system.
Fig. 2 is a protocol stack diagram of a radio interface in the LTE system.
Fig. 3 is a configuration diagram of a radio frame used in the LTE system.
Fig. 4 is a diagram for describing a UE-to-Network relay according to the embodiment.
Fig. 5 is a block diagram of a UE 100.
Fig. 6 is a block diagram of an eNB 200.
Fig. 7 is a block diagram of an MME/S-GW 300.
Fig. 8 is a diagram for describing an operation environment.
Fig. 9 is a sequence diagram for describing an operation according to a first embodiment.
Fig. 10 is a sequence diagram for describing an operation according to a modification of the first embodiment.
Fig. 11 is a sequence diagram for describing an operation according to a third embodiment.

### DESCRIPTION OF THE EMBODIMENT

### [Overview of embodiment]

A radio terminal according to one embodiment comprises a processor. The processor is configured to relay, through a proximity service, traffic of a remote terminal configured to perform communication with a network through a relay terminal between the remote terminal and the network. The processor is configured to notify the network of information on the number of remote terminals in which the traffic is relayed by the radio terminal.

The processor is configured to notify the network of the number of the remote terminals in response to Festablishment of a connection for relaying between a new remote terminal and the radio terminal.

The processor is configured to use a Sidelink UE Information message used for indicating sidelink information to a base station to notify the network of the number of the remote terminals.

A processor according to one embodiment is a processor for controlling a radio terminal. The processor is configured to relay, through a proximity service, traffic of a remote terminal configured to perform communication with a network through a relay terminal between the remote terminal and the network. The processor is configured to notify the network of the number of remote terminals in which the traffic is relayed by the radio terminal.

A network device according to one embodiment is configured to communicate with a radio terminal configured to relay, through a proximity service, traffic of a remote terminal configured to perform communication with a network through a relay terminal between the remote terminal and the network. The network device is configured to receive, from the radio terminal, information on the number of remote terminals in which the traffic is relayed by the radio terminal.

A processor according to one embodiment is a processor for controlling a network device configured to communicate with a radio terminal configured to relay, through a proximity service, traffic of a remote terminal configured to perform communication with a network through a relay terminal between the remote terminal and the network. The processor is configured to receive, from the radio terminal, information on the number of remote terminals in which the traffic is relayed by the radio terminal.

A radio terminal according to the embodiment can relay data by a proximity service. The radio terminal comprises a controller that performs control of notifying a network device that sets a relay bearer used for relaying by the proximity service, of information on the number of remote terminals to which data is relayed by the radio terminal.

The controller may perform control of relaying data of the remote terminal by using the relay bearer set with a bit rate higher than a predetermined value based on the number of the remote terminals.

The controller may perform control to notify the network device of information on the number of the remote terminals when connection for relaying by the proximity service is established to a new remote terminal.

The controller may perform control to notify the network device of information on the number of the remote terminals when requesting radio resources for relaying by the proximity service.

The radio terminal may further comprise a receiver that receives from the network device information on the maximum number of remote terminals that can be relayed using the relay bearer. The controller may perform control to notify the network device of information on the number of the remote terminals when the number of the remote terminals exceeds the maximum value.

A network device according to the embodiment comprises a receiver that receives, from a radio terminal that can relay data by proximity service, information on the number of remote terminals to which data is relayed by the radio terminal, and a controller that set a relay bearer used for relaying by the proximity service, based on the number of remote terminals.

When the relay bearer is a GBR bearer whose bit rate is guaranteed, the controller may set the relay bearer with a higher bit rate higher than the first predetermined value based on the number of the remote terminals; when the relay bearer is a non-GBR bearer whose bit rate is not guaranteed, the controller may set the relay bearer with a total maximum bit rate higher than the second predetermined value based on the number of the remote terminals.

A radio terminal according to the embodiment can relay data by a proximity service. The radio terminal comprises a receiver that receives information on a maximum number of remote terminals that can be relayed using a relay bearer used for relaying by the proximity service from a network device; and a controller that control so that the number of the remote terminals being relayed by the relay bearer does not exceed the maximum value.

A network device according to the embodiment comprises a controller that sets a relay bearer used for relaying by proximity service to a radio terminal that can relay data by the proximity service. The controller performs control to notify the radio terminal of information on the maximum number of remote terminals that can be relayed using the relay bearer.

The radio terminal according to the embodiment can relay data using a relay bearer used for relaying by proximity service. The radio terminal comprises a controller that performs control to notify the base station of the number of remote terminals in which the same relay bearer is used; and a receiver that receives allocation information of radio resources allocated for the relay based on the number of the remote terminals.

When the controller relays a plurality of packets having different priorities to the base station using the same relay bearer, the controller may perform control to prioritize transmission of the packet having a higher priority to the base station.

When the controller relays a plurality of packets having the same priority received from a plurality of remote terminals to the base station, the controller may control so that transmission opportunity of the packet of each of the plurality of remote UEs is uniform.

Abase station according to an embodiment comprises a receiver that receives the number of remote terminals using the same relay bearer from a radio terminal that can relay data using a relay bearer used for relaying by proximity service; and a transmitter that notifies the radio terminal of allocation information of the radio resource for the relay allocated based on the number of the radio resources.

### (Mobile Communication System)

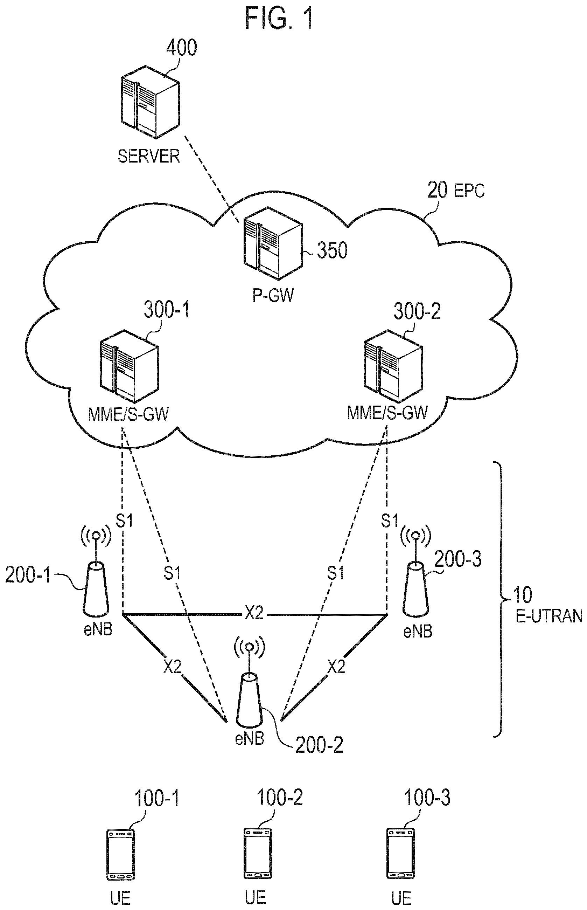

An LTE system which is a mobile communication system according to the embodiment will be described. FIG. 1 is a diagram showing a configuration of an LTE system.

As illustrated in FIG. 1, the LTE system includes a plurality of UEs (User Equipments) 100, E-UTRAN (Evolved-UMTS Terrestrial Radio Access Network) 10, and EPC (Evolved Packet Core) 20. A server 400 is provided in an external network that is not managed by an operator of the cellular network.

The UE 100 corresponds to a radio terminal. The UE 100 is a mobile communication device. The UE 100 performs radio communication with a cell (a serving cell). Configuration of the UE 100 will be described later.

The E-UTRAN 10 corresponds to a radio access network. The E-UTRAN 10 includes a plurality of eNBs (evolved Node-Bs) 200. The eNB 200 corresponds to a base station. The eNBs 200 are connected mutually via an X2 interface. Configuration of the eNB 200 will be described later.

The eNB 200 manages one or a plurality of cells. The eNB 200 performs radio communication with the UE 100 which establishes a connection with the cell of the eNB 200. The eNB 200 has a radio resource management (RRM) function, a routing function for user data (hereinafter simply referred as "data"), and a measurement control function for mobility control and scheduling, and the like. It is noted that the "cell" is used as a term indicating a minimum unit of a radio communication area. It is noted that the "cell" is also used as a term indicating a function of performing radio communication with the UE 100.

The EPC 20 corresponds to a core network. The EPC 20 includes a plurality of MME (Mobility Management Entity)/S-GWs (Serving-Gateways) 300 and a P-GW (Packet Data Network Gateway) 350. The MME performs various mobility controls and the like for the UE 100. The S-GW performs control to transfer data. MME/S-GW 300 is connected to eNB 200 via an S1 interface. The E-UTRAN 10 and the EPC 20 constitute a network. The P-GW 350 performs control to relay the user data from the external network (and to the external network).

The Server 400 is, for example, a ProSe application server (ProSe Application Server). In this case, the Server 400 manages identifiers used in ProSe. For example, the Server 400 stores "EPC ProSe user ID" and "ProSe function ID". The Server 400 maps "application layer user ID" and "EPC ProSe user ID".

The Server 400 may have the ProSe function. The ProSe function is a logical function used for network related operation required for ProSe. The ProSe function plays a different role for each feature of ProSe. The Server 400 may be a network device having only the ProSe function.

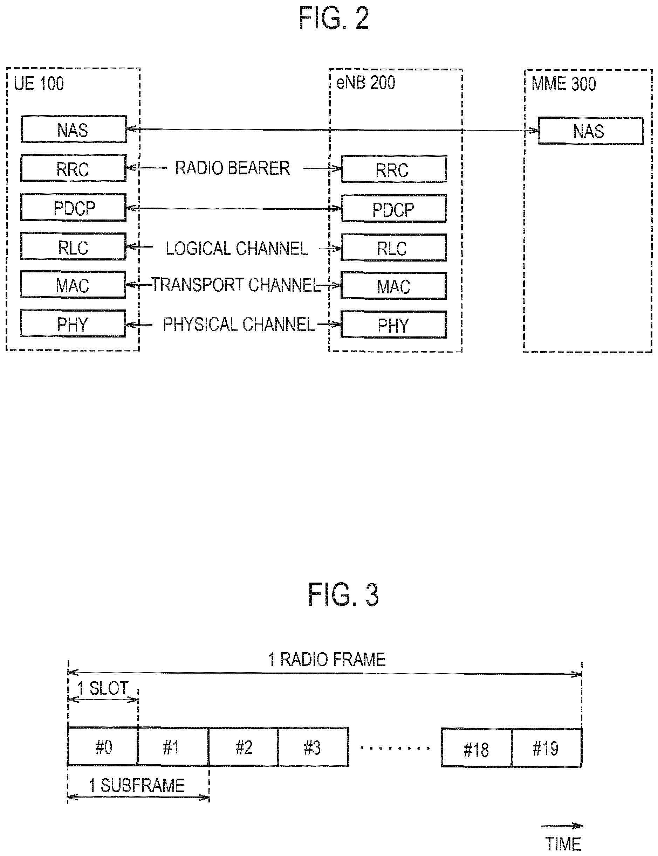

FIG. 2 is a protocol stack diagram of a radio interface in the LTE system. As illustrated in FIG. 2, the radio interface protocol is classified into a layer 1 to a layer 3 of an OSI reference model, wherein the layer 1 is a physical (PHY) layer. The layer 2 includes a MAC (Medium Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, data and control signal are transmitted via the physical channel.

The MAC layer performs priority control of data, a retransmission process by hybrid ARQ (HARQ), and a random access procedure and the like. Between the MAC layer of the UE 100 and the MAC layer of the eNB 200, data and control signal are transmitted via a transport channel. The MAC layer of the eNB 200 includes a scheduler. The scheduler determines a transport format of an uplink and a downlink (a transport block size and a modulation and coding scheme (MCS)) and a resource block to be assigned to the UE 100.

The RLC layer transmits data to an RLC layer of a reception side by using the functions of the MAC layer and the PHY layer. Between the RLC layer of the UE 100 and the RLC layer of the eNB 200, data and control signal are transmitted via a logical channel.

The PDCP layer performs header compression and decompression, and encryption and decryption.

The RRC layer is defined only in a control plane dealing with control signal. Between the RRC layer of the UE 100 and the RRC layer of the eNB 200, message (RRC messages) for various types of configuration are transmitted. The RRC layer controls the logical channel, the transport channel, and the physical channel in response to establishment, re-establishment, and release of a radio bearer. When there is a connection (RRC connection) between the RRC of the UE 100 and the RRC of the eNB 200, the UE 100 is in an RRC connected stat (connected state). When there is not a connection between the RRC of the UE 100 and the RRC of the eNB 200, the UE 100 is in an RRC idle state (idle state).

A NAS (Non-Access Stratum) layer positioned above the RRC layer performs a session management, a mobility management and the like.

FIG. 3 is a configuration diagram of a radio frame used in the LTE system. In the LTE system, OFDMA (Orthogonal Frequency Division Multiple Access) is applied to a downlink, and SC-FDMA (Single Carrier Frequency Division Multiple Access) is applied to an uplink.

As illustrated in FIG. 3, a radio frame is configured by 10 subframes arranged in a time direction. Each subframe is configured by two slots arranged in the time direction. Each subframe has a length of 1 ms. Each slot has a length of 0.5 ms. Each subframe includes a plurality of resource blocks (RBs) in a frequency direction (not shown). Each subframe includes a plurality of symbols in the time direction. Each resource block includes a plurality of subcarriers in the frequency direction. One symbol and one subcarrier forms one resource element. Of the radio resources (time and frequency resources) assigned to the UE 100, a frequency resource can be identified by a resource block. Of the radio resources (time and frequency resources) assigned to the UE 100, a time resource can be identified by a subframe (or a slot).

In the downlink, a section of several symbols at the head of each subframe is a control region used as a physical downlink control channel (PDCCH) for mainly transmitting a control signal. Details of the PDCCH will be described later. Furthermore, the other portion of each subframe is a region available as a physical downlink shared channel (PDSCH) for mainly transmitting downlink data.

In the uplink, both ends in the frequency direction of each subframe are control regions used as a physical uplink control channel (PUCCH) for mainly transmitting an uplink control signal. Furthermore, the other portion of each subframe is a region available as a physical uplink shared channel (PUSCH) for mainly transmitting uplink data.

### (Proximity service)

Proximity service (ProSe) will be described. In the ProSe, a plurality of UEs 100 transmit and receive various types of signals via a direct radio link without involving the eNB 200. The direct radio link in the ProSe is called "Sidelink".

The "Sidelink" is a UE-to-UE interface for direct discovery and direct communication. The "Sidelink" corresponds to a PC5 interface. The PC5 is a reference point between UEs capable of utilizing proximity service used for the control and a user plane for direct discovery, direct communication, and UE-to-Network relay based on proximity service. The PC5 interface is a UE-to-UE interface in the ProSe.

Two modes, namely, "direct discovery" and "direct communication", are defined for modes of the ProSe.

The direct discovery is a mode of searching a partner destination by directly transmitting, between UEs, a discovery signal that does not specify a specific destination. The direct discovery is a procedure for discovering another UE in the proximity of a UE by using a direct radio signal in E-UTRA (Evolved Universal Terrestrial Radio Access) via the PC5. The direct discovery is a procedure adopted by a UE 100 capable of executing the proximity service for discovering another UE 100 capable of executing the proximity service by using only the capability of the two UEs 100 with the help of the E-UTRA technology. The direct discovery is supported only if a service is provided to the UE 100 by the E-UTRAN (eNB 200 (cell)). The service can be provided by the E-UTRAN if the UE 100 is either connected to the cell (eNB 200), or exists in the cell.

The resource allocation types for the transmission (announcement) of a discovery signal (discovery message) include "type 1" and "type 2 (type 2B)". In the "type 1", the UE 100 selects the radio resource. In the "type 2 (type 2B)", the eNB 200 allocates the radio resource.

A "Sidelink Direct Discovery" protocol stack includes a physical (PHY) layer, a MAC layer, and a ProSe protocol. Between the physical layer of a UE (A) and the physical layer of a UE (B), a discovery signal is transmitted via a physical channel called a physical sidelink discovery channel (PSDCH). Between the MAC layer of the UE (A) and the MAC layer of the UE (B), a discovery signal is transmitted via a transport channel called a sidelink discovery channel (SL-DCH).

The direct communication is a mode in which data is directly transmitted between UEs by specifying a specific destination (destination group). The direct communication is communication between two or more UEs capable of executing the proximity service through user plane transmission in which the E-UTRA technology is used via a path without passing through any network node.

The resource allocation types of the direct communication include "mode 1" and "mode 2". In the "mode 1", the eNB 200 specifies the radio resource of the direct communication. In the "mode 2", the UE 100 selects the radio resource of the direct communication.

A direct communication protocol stack includes a physical (PHY) layer, a MAC layer, an RLC layer, and a PDCP layer. Between the physical layer of a UE (A) and the physical layer of a UE (B), a control signal is transmitted via a physical sidelink control channel (PSCCH). Between the physical layer of the UE (A) and the physical layer of the UE (B), data is transmitted via a physical sidelink shared channel (PSSCH). A synchronization signal and the like may be transmitted via a physical sidelink broadcast channel (PSBCH). Between the MAC layer of the UE (A) and the MAC layer of the UE (B), data is transmitted via a transport channel called a sidelink shared channel (SL-SCH). Between the RLC layer of the UE (A) and the RLC layer of the UE (B), data is transmitted via a logical channel called a sidelink traffic channel (STCH).

### (UE-to-Network relay)

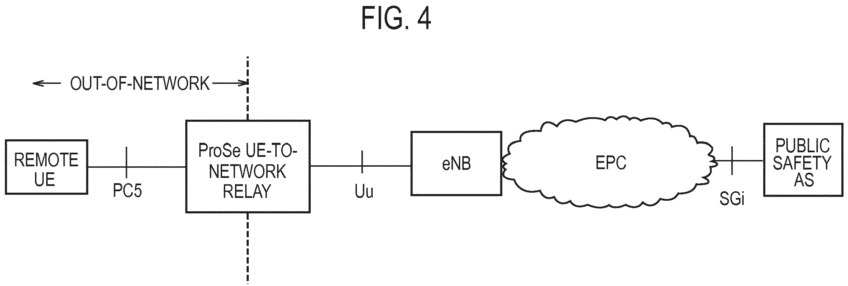

The UE-to-Network relay will be described by using Fig. 4. Fig. 4 is a diagram for describing the UE-to-Network relay according to the embodiment.

In Fig. 4, a remote UE is a UE located outside the network (Out-of-Network). That is, the remote UE is located outside the coverage of a cell. The remote UE may be located within the coverage of the cell. Therefore, the remote UE is a UE 100 to which a service is not directly provided by the E-UTRAN 10 (a UE 100 which is not served by the E-UTRAN 10). The remote UE 100 can communicate with a Packet Data Network (PDN) via a relay UE described later. The remote UE may be a UE for public safety (ProSe-enabled Public Safety UE).

The "ProSe-enabled Public Safety UE" is configured to be allowed use for public safety by an HPLMN. The "ProSe-enabled Public Safety UE" can use the proximity service, and supports the procedures in the proximity service as well as specific capability for public safety. For example, the "ProSe-enabled Public Safety UE" transmits information for public safety through the proximity service. The information for public safety includes, for example, information on disasters (such as earthquakes and fires), and information used by fire officials or police officials.

The remote UE is provided with the ProSe relay service from the relay UE, as described later. The UE-to-Network relay is executed between the remote UE that is provided with the ProSe relay service and the relay UE that provides the ProSe relay service.

For the remote UE, the relay UE (ProSe UE-to Network Relay) provides the ProSe relay service. Specifically, for the remote UE, the relay UE provides service continuity of the communication with a packet data network. Therefore, the relay UE relays data (unicast traffic) between the remote UE and the network. The relay UE relays data (traffic) of the remote UE through the proximity service (direct communication). Specifically, the relay UE relays data (uplink traffic) received from the remote UE via the PC5 interface to the eNB 200 via a Uu interface (LTE-Uu) or a Un interface (LTE-Un). The relay UE relays data (downlink traffic) received from the eNB 200 via the Uu interface or the Un interface to the remote UE via the PC5 interface. The relay UE is located only within the network (within the coverage of the cell).

The relay UE can provide a comprehensive function that enables the relay of any type of traffic related to the communication for public safety.

The relay UE and the remote UE can transmit data and control signals between the physical layers. Similarly, the relay UE and the remote UE can transmit data and control signals between the MAC layers, between the RLC layers, and between the PDCP layers. The relay UE may have an IP-Relay layer as an upper layer of the PDCP layer. The remote UE may also have an IP layer as an upper layer of the PDCP layer. The relay UE and the remote UE can transmit data and control signals between the IP-Relay layer and the IP layer. It is possible for the relay UE to transmit data between the IP-Relay layer and the IP layer of the IP-GW 350.

In an AS (Access Stratum) layer, the relay UE can transmit data (traffic) to the remote UE by using broadcast. In the AS layer, the relay UE may transmit data to the remote UE by using unicast. If the UE-to-Network relay is executed by using broadcast, a feedback in the AS layer is not performed, but a feedback in a NAS (Non Access Stratum) layer may be performed, between the relay UE and the remote UE. If the UE-to-Network relay is executed by using unicast, a feedback in the AS layer may be performed.

### (Radio terminal)

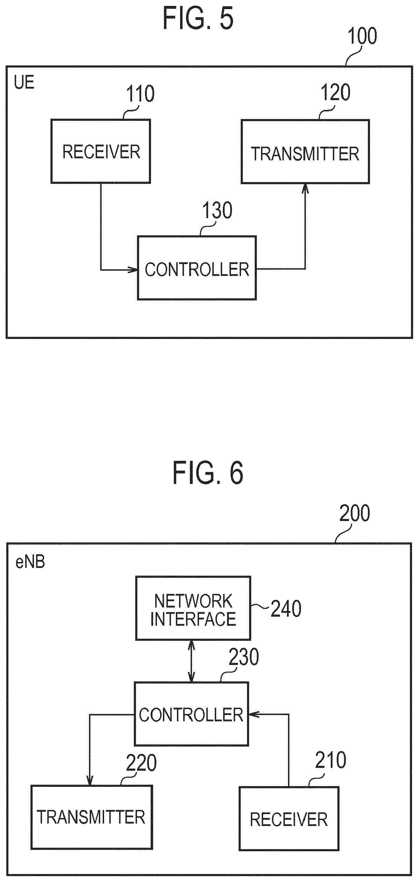

The UE 100 (radio terminal) according to the embodiment will be described. Fig. 5 is a block diagram of the UE 100. As illustrated in Fig. 5, the UE 100 includes a receiver 110, a transmitter 120, and a controller 130. The receiver 110 and the transmitter 120 may be unified as one in the form of a transceiver.

The receiver 110 performs various types of receptions under the control of the controller 130. The receiver 110 includes an antenna. The receiver 110 converts a radio signal received by the antenna into a baseband signal (reception signal). The receiver 110 outputs the baseband signal to the controller 130.

If the UE 100 is a "ProSe-enabled Public Safety UE", the receiver 110 can simultaneously receive radio signals in two different frequencies. For example, the UE 100 has two receivers 110 (2 RX Chains). The UE 100 can receive a cellular radio signal by one of the receivers 110. The UE 100 can receive a ProSe radio signal by the other receiver 110.

The transmitter 120 performs various types of transmissions under the control of the controller 130. The transmitter 120 includes an antenna. The transmitter 120 converts a baseband signal (transmission signal) output from the controller 130 into a radio signal. The transmitter 120 transmits the radio signal from the antenna.

The controller 130 performs various types of controls in the UE 100. The controller 130 includes a processor and a memory. The memory stores a program to be executed by the processor, and information to be used for a process by the processor. The processor includes a baseband processor and a CPU (Central Processing Unit). The baseband processor performs modulation and demodulation, coding and decoding, and the like, of the baseband signal. The CPU executes a program stored in the memory to perform various types of processes. The processor may include a codec that performs encoding and decoding on sound and video signals. The processor executes various types of processes described later, and various types of communication protocols described above.

The UE 100 may include a GNSS receiving equipment. The GNSS receiving equipment receives a GNSS signal to obtain location information indicating a geographical position of the UE 100. The GNSS receiving equipment outputs the received signal to the controller 130. The UE 100 may have a GPS function for acquiring the location information of the UE 100.

The below-described process (operation) executed by the UE 100 is executed by at least any one of the receiver 110, the transmitter 120, and the controller 130 included in the UE 100; however, for simplicity, it is assumed that the process is executed by the UE 100.

### (Base station)

The eNB 200 (base station) according to the embodiment will be described. Fig. 6 is a block diagram of the eNB 200. As illustrated in Fig. 6, the eNB 200 includes a receiver 210, a transmitter 220, a controller 230, and a network interface 240. The transmitter 210 and the receiver 220 may be unified as one in the form of a transceiver.

The receiver 210 performs various types of receptions under the control of the controller 230. The receiver 210 includes an antenna. The receiver 210 converts a radio signal received by the antenna into a baseband signal (reception signal). The receiver 210 outputs the baseband signal to the controller 230.

The transmitter 220 performs various types of transmissions under the control of the controller 230. The transmitter 220 includes an antenna. The transmitter 220 converts a baseband signal (transmission signal) output from the controller 230 into a radio signal. The transmitter 220 transmits the radio signal from the antenna.

The controller 230 performs various types of controls in the eNB 200. The controller 230 includes a processor and a memory. The memory stores a program to be executed by the processor, and information to be used for a process by the processor. The processor includes a baseband processor and a CPU (Central Processing Unit). The baseband processor performs modulation and demodulation, coding and decoding, and the like, of the baseband signal. The CPU executes a program stored in the memory to perform various types of processes. The processor executes various types of processes described later, and various types of communication protocols described above.

The network interface 240 is connected to an adjacent eNB 200 via the X2 interface and is connected to the MME/S-GW 300 via the S1 interface. The network interface 240 is used in communication performed on the X2 interface, communication performed on the S1 interface, and the like.

The below-described process (operation) executed by the eNB 200 is executed by at least any one of the transmitter 210, the receiver 220, the controller 230, and the network interface 240 included in the eNB 200; however, for simplicity, it is assumed that the process is executed by the eNB 200.

### (MME/S-GW)

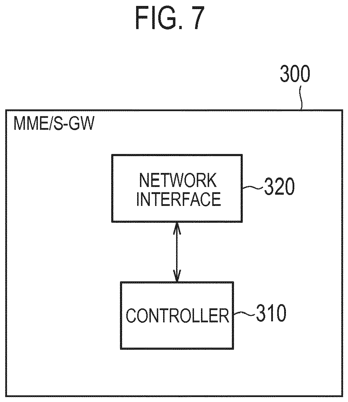

The MME/S-GW 300 according to the embodiment will be described. Fig. 7 is a block diagram of the MME/S-GW 300. As illustrated in Fig. 7, the MME/S-GW 300 includes a controller 310 and a network interface (transmitter/receiver) 320.

The controller 310 performs various types of controls in the MME/S-GW 300. The controller 310 includes a processor and a memory. The memory stores a program to be executed by the processor, and information to be used for a process by the processor. The processor includes a baseband processor and a CPU (Central Processing Unit). The baseband processor performs modulation and demodulation, coding and decoding, and the like, of the baseband signal. The CPU executes a program stored in the memory to perform various types of processes. The processor executes various types of processes described later, and various types of communication protocols described above.

The network interface 320 is connected to the eNB 200 via the S1 interface. The network interface 320 is connected to the P-GW 350. The network interface 240 is used for communication performed over the S1 interface, and the like.

The below-described process (operation) executed by the MME/S-GW 300 is executed by at least any one of the controller 310 and the network interface 320 included in the MME/S-GW 300, but is described as a process executed by the eNB 200 for the purpose of convenience.

Each of the MME and the S-GW may be configured by different devices. The P-GW 350 includes, similarly to the MME/S-GW 300, a controller and a network interface (transmitter/receiver), and thus, description will be omitted.

### (Operation environment)

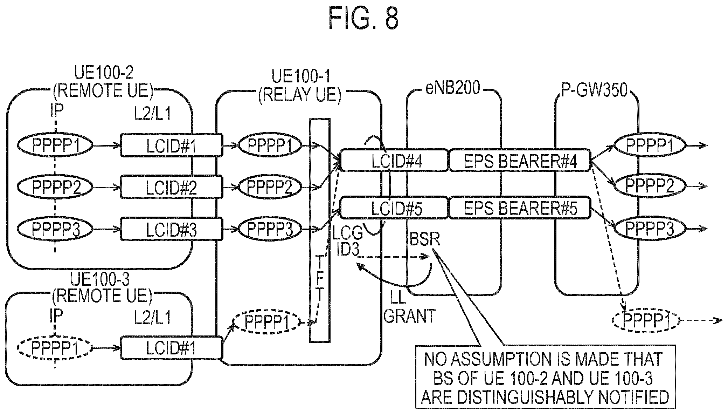

An operation environment will be described in reference with Fig. 8. Fig. 8 is a diagram for describing the operation environment.

As illustrated in Fig. 8, in a UE 100-1 being a relay UE, a connection for the UE-to-Network relay is established to a plurality of remote UEs (specifically, a UE 100-2 and a UE 100-3). Therefore, the UE 100-2 and the UE 100-3 are a remote UE under a control of the UE 100-1 (relay UE). If one relay UE relays traffic (packets) of the plurality of remote UEs, it is assumed that packets of the plurality of remote UEs are allocated to one EPS bearer for relaying.

Specifically, as illustrated in Fig. 8, it is presumed that a plurality of packets occur in the UE 100-2. The plurality of packets includes a packet 1 having a priority (ProSe Per Packet Priority (PPPP)) 1, a packet 2 having a priority 2, and a packet 3 having a priority 3 set for every packet. The UE 100-2 associates the packet 1 with LCID #1, the packet 2 with LCID #2, and the packet 3 with LCID #3, and transmits the packets 1 to 3 to the UE 100-1. The UE 100-1 receives the packets 1 to 3.

It is presumed that packets occur in the UE 100-3. The UE 100-3 associates, similarly to the UE 100-2, the packet 1 having a priority 1 with the LCID #1, and transmits the packet 1 to the UE 100-1.

Similarly to the existing cellular communication (UL Uu communication), the UE 100-2 maps each packet received from each remote UE with the LCID having an appropriate QoS of a logical channel group identifier (LCGID) corresponding to each of the established EPS bearers in accordance with TFT (Traffic Flow Template) defined in an upper layer. In Fig. 8, the UE 100-1 maps the packets 1 and 2 of the UE 100-2 with LCID #4, and maps the packet 3 with LCID #5. The UE 100-1 maps the packet 1 of the UE 100-3 with the LCID #4.

The UE 100-1 maps each LCID and each LCGID in accordance with mapping information associating the logical channel identifier (LCID) provided by the eNB 200 with the logical channel group identifier (LCGID). In Fig. 8, the UE 100-1 maps the LCID #4 and the LCID #5 to the LCGID #3.

The UE 100-1 notifies the eNB 200 of a buffer amount mapped to each LCGID as a buffer state (BS) by an existing buffer state report (BSR). The existing BSR is used to provide, to the serving cell (serving eNB 200), information on the buffer amount that can be utilized for transmission in an uplink buffer associated with a MAC layer (MAC entity). In Fig. 8, the UE 100-1 notifies the eNB 200, by the BSR, of the buffer amount associated with the LCGID #3 (that is, the buffer amount of the packets 1 to 3 of the UE 100-2 and packet 1 of the UE 100-3).

The eNB 200 allocates, based on the BSR, the radio resource for relaying to the UE 100-1 by the control information (UL grant). Here, it is unknown to the eNB 200 whether the buffer state based on the BSR indicates the buffer amount including the traffic (packets) of the plurality of remote UEs or indicates the buffer amount including the traffic (packet) of a single remote UE. Further, even if the traffic amounts are the same, the traffic of the plurality of remote UEs requires more radio resources than the traffic of the single remote UE. Therefore, similarly to the cellular communication, if the eNB 200 allocates, to the UE 100-1, the same amount of radio resource as that for the buffer amount including the traffic of the single remote UE based on the BSR, the radio source may be insufficient to transmit the packets received from the plurality of remote UEs to the eNB 200. As a result, the communication quality (QoS) may not be satisfied in the UE-to-Network relay.

Therefore, a technology will be described by which the communication quality (QoS) in the UE-to-Network relay can be satisfied even if one Relay UE relays the traffic (packets) of the plurality of remote UEs (particularly, even if a plurality of traffic is relayed by one bearer (an EPS bearer for relaying)), below.

### [First Embodiment]

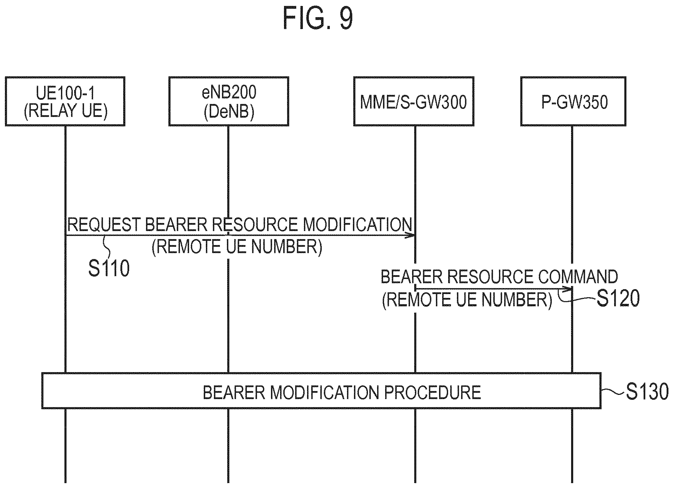

An operation according to a first embodiment will be described by using Fig. 9. Fig. 9 is a sequence diagram for describing an operation according to the first embodiment.

As illustrated in Fig. 9, in step S110, the UE 100-1 being a relay UE notifies the MME/S-GW 300 of information on the number of remote UEs to which data is relayed by the UE 100-1. The UE 100-1 may notify the MME/S-GW 300 of the information on the number of remote UEs by a bearer resource modification request (Request Bearer Resource Modification) message for a modification of the bearer resource (for example, resource allocation or release).

The UE 100-1 may notify the MME/S-GW 300 of the information on the number of remote UEs if a connection for relaying is established to a new remote UE. If the new remote UE is under the control of the UE 100-1, the UE 100-1 may notify the MME/S-GW 300 of the information on the number of remote UEs.

In step S120, the MME/S-GW 300 notifies the P-GW 350 of the information on the number of remote UEs. The MME/S-GW 300 may notify the P-GW 350 of information on the number of remote UEs by a bearer resource request message (Bearer Resource Command).

If the information on the number of remote UEs is received from the UE 100-1, the MME may transmit, to the S-GW, the information on the number of remote UEs by the bearer resource request message. The S-GW may transmit, to the P-GW 350, the bearer resource request message including the information on the number of remote UEs.

In step S130, a procedure for modifying a setting of a relay bearer (EPS bearer) is executed. Specifically, the MME/S-GW 300 and the P-GW 350 (network device, below) set (modify) a bit rate (transfer speed) of the relay bearer to a bit rate higher than a predetermined value, based on the number of remote UEs. The network device may modify, depending on the number of remote UEs, a setting of the relay bearer so as to increase the bit rate of the relay bearer. The predetermined value may be an initial value. The predetermined value may be a value before the bit rate is modified. Thus, a QoS higher than that before the setting is provided by modifying the setting of the relay bearer.

If the relay bearer is a Guaranteed Bit Rate (GBR) bearer in which the bit rate is guaranteed, the network device can set, to the relay bearer, a bit rate higher than a first predetermined value set for transmitting the traffic of a single UE, based on the number of remote UEs.

If the relay bearer is a non-GBR bearer in which the bit rate is not guaranteed, the network device can set, to the relay bearer, a total maximum bit rate (Aggregate Maximum Bit Rate (AMBR)) higher than a second predetermined value set for transmitting the traffic of a single UE to the relay bearer, based on the number of remote UEs. The network device can set, to the relay bearer, the AMBR higher than the second predetermined value by modifying the setting of the APN-AMBR being the AMBR for ever APN (access point name) and the setting of the UE-AMBR being the AMBR for every UE.

The EPS bearer is configured by an E-RAB between the relay UE and the S-GW 300, and an S5/S8 bearer between the S-GW 300 and the P-GW 350. The S5/S8 bearer is established on an S5/S8 interface. If the E-RAB described later is present, the E-RAB corresponds to the EPS bearer one-to-one. The S-GW 300 stores a correspondence relationship between the S5/S8 bearer and an S1-U bearer.

The E-RAB is configured by a data radio bearer (DRB Bearer/Radio Bearer) between the relay UE and the eNB 200 (DeNB), and the S1-U bearer between the eNB 200 and the S-GW 300.

The S1-U bearer is established on an S1-U interface. If the data radio bearer is present, the data radio bearer corresponds to the EPS bearer/E-RAB one-to-one. The eNB 200 stores a correspondence relationship between the S1-U bearer and the data radio bearer.

Therefore, each of these various types of the bearer setting is modified by modifying the EPS bearer setting.

As described later, the network device may notify the UE 100-1 of information on a maximum value (upper limit value) of the number of remote UEs that can be relayed by using the EPS bearer in which the setting has been modified.

After performing the modification of the setting of the EPS bearer, the UE 100-1 uses the relay bearer to which a bit rate higher than the predetermined value being set for transmitting the traffic of a single UE is set to relay the remote UE data. As a result, a QoS control depending on the bit rate of the EPS bearer is performed, and thus, the eNB 200 executes a scheduling of the radio resource depending on the bit rate set to the relay bearer. The UE 100-1 uses the EPS bearer in which the setting has been modified to relay (transfer) the traffic of the remote UE to the eNB 200.

As a result, it is possible for one relay UE to satisfy the communication quality (QoS) in the UE-to-Network relay even if relaying the traffic (packets) of the plurality of remote UEs by one EPS bearer for relaying. The UE 100-1 may determine the packets to be preferentially transmitted in consideration of not only the existing Logical Channel Prioritization (LCP) procedure executed based on the LCID priority but also the priority set for every packet (PPPP) and/or the fairness of the remote UE, as described in a third embodiment. Therefore, it is possible to further satisfy the communication quality (QoS) in the UE-to-Network relay.

### (Modification)

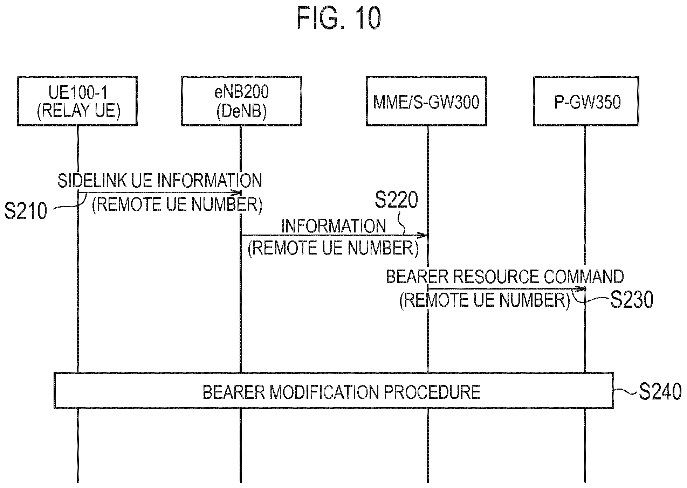

A modification of the first embodiment will be described by using Fig. 10. Fig. 10 is a sequence diagram for describing the operation according to the modification of the first embodiment. In the present modification, the UE 100-1 notifies the network device of information on the number of remote UEs via the eNB 200. Description of parts similar to those in the first embodiment will be omitted where appropriate.

In step S210 illustrated in Fig. 10, the UE 100-1 being a relay UE transmits the information on the number of remote UEs to the eNB 200. The UE 100-1 can use a SidelinkUEInformation message used for indicating the sidelink information to the eNB 200 to transmit the information on the number of remote UEs to the eNB 200, for example.

If the radio resource (transmission radio resource) is requested for the UE-to-Network relay, the UE 100-1 may transmit the information on the number of remote UEs to the eNB 200.

In step S220, if the number of remote UEs is received, the eNB 200 may notify the MME/S-GW 300 of the information on the number of remote UEs under the control of the UE 100-1.

Steps S230 and S240 correspond to steps S120 and S130.

In this manner, the UE 100-1 can flexibly notify the MME/S-GW 300 of the number of remote UEs, and thus, it is possible to satisfy the communication quality (QoS) in the UE-to-Network relay even if one relay UE relays traffic (packets) of the plurality of remote UEs.

If the information on the number of remote UEs is received from the UE 100-1, the eNB 200 may execute, in consideration of the number of remote UEs, scheduling of the radio resource. That is, if there are plurality of number of remote UEs s, more radio resource may be allocated compared to when there is a singular number of remote UEs.

### [Second Embodiment]

A second embodiment will be described. Description of parts similar to those in the first embodiment will be omitted where appropriate.

In the second embodiment, the network device (MME/S-GW 300 and P-GW 350) notifies the UE 100-1 being a relay UE of information on a maximum value (upper limit value) of the number of remote UEs capable of being relayed by using the relay bearer.

The maximum value (upper limit value) of the number of remote UEs is the largest number of the remote UEs in which the communication quality of the predetermined value or more is guaranteed when the relay bearer is used. Therefore, if data (traffic) of the plurality of remote UEs exceeding the maximum value of the number of remote UE is relayed by using an identical relay bearer, the communication quality may deteriorate.

The information on the maximum value of the number of the remote UEs may be the maximum number of the remote UEs itself. The information on the maximum value of the number of the remote UEs may be a bit rate value set to the relay bearer, for example. The UE 100-1 may also calculate the maximum number of the remotes UE according to the bit rate.

If the relay bearer is established, the network device may notify the UE 100-1 of the information on the maximum value of the number of remote UEs in the established relay bearer. Therefore, the network device may notify the UE 100-1 of the information on the maximum value of the number of remote UEs for every relay bearer.

The UE 100-1 controls so that the number of remote UEs under the control of the UE 100-1 does not exceed the maximum value of the number of remote UEs in the relay bearer.

For example, if a relay is requested from a new remote UE, the UE 100-1 connected to the same number of remote UEs as the information on the maximum value of the number of remote UEs may reject the relay of the new remote UE.

If the number of remote UEs under the control of the UE 100-1 exceeds the maximum value of the number of remote UEs by being connected with a new remote UE, similarly to the first embodiment, the UE 100-1 may notify the network device of the information on the number of remote UEs. As a result, the bit rate of the relay bearer is modified to a higher value, and thus, it is possible to satisfy the communication quality (QoS) in the UE-to-Network relay even if the new remote UE is started to be relayed.

The network device can newly notify the UE 100 of the information on the maximum value of the number of remote UEs in the relay bearer in which the setting has been modified. The UE 100-1 can control the number of remote UEs, based on the maximum value of the newly notified number of remote UEs.

### [Third Embodiment]

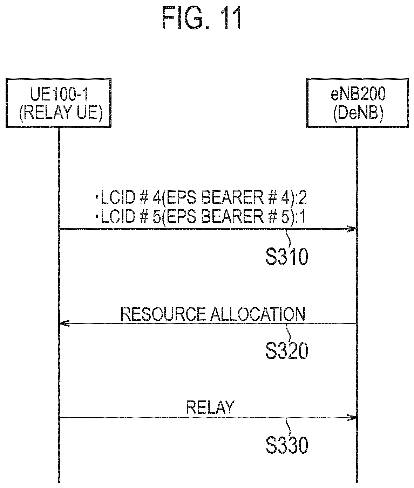

By using Fig. 11, a third embodiment will be described. Fig. 11 is a sequence diagram for describing the operation according to the third embodiment. In the third embodiment, the UE 100-1 notifies the eNB 200 of the number of remote UEs in which an identical relay bearer is used.

As illustrated in Fig. 11, in step S310, the UE 100-1 notifies the eNB 200 of the number of remote UEs in which an identical relay bearer is used. For example, as illustrated in Fig. 8, if the packets 1 and 2 of the UE 100-2 and the packet 1 of the UE 100-3 are mapped with the LCID #4, the UE 100-1 notifies the eNB 200 of the remote UE number in the LCID #4 (EPS bearer #4) being "2". If the packet 3 of the UE 100-2 is mapped with the LCID #5, the UE 100-1 notifies the eNB 200 of the remote UE number in the LCID #5 (EPS bearer #5) being "1". Therefore, the remote UE number changes by being mapped with packets and LCIDs, and thus, the UE 100-1 notifies the eNB 200 of an instantaneous value of the number of remote UEs (traffic number).

The UE 100-1 may notify the eNB 200 of the remote UE number for every LCID (EPS bearer) by MAC CE. The UE 100-1 may notify the eNB 200 of the remote UE number for every LCID along with the BS (buffer state). The UE 100-1 may notify the eNB 200 of the BSR including information indicating the remote UE number. The UE 100-1 may notify the eNB 200 of the information indicating the remote UE number separately from the BSR. The UE 100-1 may notify the eNB 200 of the remote UE number for every LCID by the SidelinkUEInformation message.

The UE 100-1 may omit the notification of the remote UE number in the LCID having a singular number of remote UEs. Therefore, the UE 100-1 may notify the eNB 200 of the remote UE number in the LCID having a plurality of number of remote UEs. The UE 100-1 may notify the eNB 200 of the remote UE number if the remote UE number for every LCID is modified.

The number of remote UEs in accordance with the mapping of the LCIDs and the packets is notified, and thus, a remote UE in which a packet (traffic) has not occurred is not taken into consideration. Therefore, in the present embodiment, the number of remote UEs being notified depends on the number of remote UEs in which the packets are occurring.

In step S320, the eNB 200 allocates the radio resource for relaying to the UE 100-1, based on the remote UE number. The eNB 200 allocates the radio resource so that the radio resource amount increases as the number of remote UEs increases. Even if the number of remote UEs under the control of the UE 100-1 is the same, the eNB 200 may allocate more radio resources to the UE 100-1 having a relay bearer in which the number of remote UEs is larger. The eNB 200 notifies the UE 100-1 of allocation information of the allocated radio resource based on the number of remote UEs. The UE 100-1 receives the allocation information of the radio resource from the eNB 200.

As a result, it is possible to consider the number of remote UEs in which the packets are actually occurring, and thus, the eNB 200 can efficiently allocate the radio resource.

In step S330, the UE 100-1 uses the allocated radio resource to relay the data (traffic) of the relay UE to the eNB 200.

If the identical relay bearer (for example, the EPS bearer #4) is used to relay a plurality of packets having different priorities (PPPP) to the eNB 200, the UE 100-1 controls to preferentially transmit (relay) the packet having a higher priority to the eNB 200. For example, if the packet 1 has a higher priority than the packet 2, the UE 100-1 preferentially transmits the packet 1 over the packet 2 to the eNB 200. Thus, the UE 100-1 determines the packet (traffic) to be preferentially transmitted, in consideration of not only the existing LCP procedure but also the priority (PPPP) of the packets mapped to the identical LCID. As a result, a relay in which the packet priority is considered can be executed, and thus, it is possible to satisfy the communication quality (QoS) of each of the remote UEs.

If an identical relay bearer is used to relay a plurality of packets having an identical priority received from a plurality of remote UEs to the eNB 200, the UE 100-1 controls so that a transmission opportunity of the packets of each of the plurality of remote UEs is uniform. For example, the UE 100-1 assumes a case where a plurality of packets having a priority 1 are received from the UE 100-2 and a plurality of packets having the priority 1 are received from the UE 100-3. The UE 100-1 does not start the transmission of the plurality of packets from the UE 100-3 to the eNB 200 after transmitting all of the plurality of packets from the UE 100-2 to the eNB 200, and the UE 100-1 can alternately transmit the packets of the UE 100-2 and the packets of the UE 100-3 to the eNB 200, for example. To perform such a control, the UE 100-1 may appropriately divide data (RLC SDU and MAC SDU) and may appropriately store the packets (RLC SDU and MAC PDU). Thus, if receiving the packets having the identical priority (PPPP) from each of the plurality of remote UEs, the UE 100-1 may execute a control to fairly transmit the remote UE packets so that there is no difference in the QoS between the remote UEs. Thus, it is possible to suppress the communication quality of some of the remote UEs from deteriorating.

### [Other Embodiments]

The contents of the present application are described according to each of the above-described embodiments, but it should not be understood that the discussion and the drawings constituting a part of this disclosure limit to the contents of the present application. From this disclosure, various alternative embodiments, examples, and operational technologies will become apparent to those skilled in the art.

In the above-described first embodiment, the network device may determine, based on a Channel Quality Indicator (CQI) parameter being an indicator indicating the reception quality of a downlink channel notified from the UE 100-1, whether or not to modify a setting of the GBR bearer as the relay bearer or to modify a non-GBR bearer setting as the relay bearer. Therefore, the network device may modify not only the number of remote UEs but also the setting of the relay bearer, based on the CQI.

The network device may not only modify the established setting of the relay bearer, but also establish the EPS bearer (GBR bearer/non-GBR bearer) in consideration of the number of remote UEs when establishing the EPS bearer as the bearer for relaying. In this case, the network device may establish the EPS bearer (GBR bearer/non-GBR bearer) for relaying in consideration of not only the number of remote UEs but also the CQI parameter.

The network device may execute the modification (or establishment) of the setting of the EPS bearer as the relay bearer, based on a QoS Class Identifier (QCI) parameter for identifying a QoS class. The QCI parameter is used as a standard of a node-specific parameter for controlling a bearer level packet forwarding treatment. The QCI parameter may be determined by an application (traffic) and may be specified by the UE 100-1.

In the above-described third embodiment, the UE 100-1 notifies the eNB 200 of the remote UE number for every LCID (EPS bearer); however, the UE 100-1 may notify the eNB 200 of the number (entire number) of the remote UEs in which the packets (traffic) is occurring instead of the number of remote UEs for every LCID (EPS bearer).

In the above-described third embodiment, if the packets having the identical priority (PPPP) are received from each of the plurality of remote UEs, the UE 100-1 may perform a control to fairly transmit (relay) the remote UE packets even if these packets are not mapped to the identical LCIDs (relay bearers). Therefore, regardless of whether or not the packets of the remote UEs are mapped to the identical LCIDs (relay bearers), the UE 100-1 may perform a control to fairly transmit (relay) the remote UE packets having different transmission sources to the eNB 200 in consideration of the packet priority (PPPP) (and the LCID priority).

The operation according to each of the above-described embodiments may be combined to be executed, where necessary. In each of the above-described sequences, all of the operations may not be necessarily essential. For example, in each sequence, only some of the operations may be executed.

Although not particularly mentioned in each of the above-described embodiments, a program for causing a computer to execute each process performed by any one of the above-described nodes (such as the UE 100 and the eNB 200) may be provided. The program may be recorded on a computer-readable medium. If the computer-readable medium is used, it is possible to install the program on a computer. Here, the computer-readable medium recording therein the program may be a non-transitory recording medium. The non-transitory recording medium may include, but not be limited to, a CD-ROM and a DVD-ROM, for example.

A chip may be provided which is configured by: a memory for storing a program for performing each process performed by any one of the UE 100 and the eNB 200; and a processor) for executing the program stored in the memory.

In the above-described embodiments, an LTE system is described as an example of the mobile communication system; however, the LTE system is not an exclusive example, and the content according to the present application may be applied to a system other than the LTE system.

It is noted that the entire content of Japanese Patent Application No. 2015-218939 (filed on November 6, 2015) is incorporated herein by reference.

## Claims

1. A radio terminal, comprising:
a processor, wherein
the processor is configured to relay, through a proximity service, traffic of a remote terminal configured to perform communication with a network through a relay terminal between the remote terminal and the network, and
the processor is configured to notify the network of information on the number of remote terminals in which the traffic is relayed by the radio terminal.

2. The radio terminal according to claim 1, wherein
the processor is configured to notify the network of the number of the remote terminals in response to establishment of a connection for relaying between a new remote terminal and the radio terminal.

3. The radio terminal according to claim 1, wherein
the processor is configured to use a Sidelink UE Information message used for indicating sidelink information to a base station to notify the network of the number of the remote terminals.

4. A processor for controlling a radio terminal, wherein
the processor is configured to relay, through a proximity service, traffic of a remote terminal configured to perform communication with a network through a relay terminal between the remote terminal and the network, and
the processor is configured to notify the network of the number of remote terminals in which the traffic is relayed by the radio terminal.

5. A network device configured to communicate with a radio terminal configured to relay, through a proximity service, traffic of a remote terminal configured to perform communication with a network through a relay terminal between the remote terminal and the network, wherein
the network device is configured to receive, from the radio terminal, information on the number of remote terminals in which the traffic is relayed by the radio terminal.

6. A processor for controlling a network device configured to communicate with a radio terminal configured to relay, through a proximity service, traffic of a remote terminal configured to perform communication with a network through a relay terminal between the remote terminal and the network, wherein
the processor is configured to receive, from the radio terminal, information on the number of remote terminals in which the traffic is relayed by the radio terminal.
